(19) Europäisches Patentamt
European Patent Office
Office européen des brevets

(11) EP 3 680 286 A1

(12) **EUROPEAN PATENT APPLICATION**
published in accordance with Art. 153(4) EPC

(43) Date of publication:
**15.07.2020 Bulletin 2020/29**

(21) Application number: **18852958.0**

(22) Date of filing: **09.08.2018**

(51) Int Cl.:
***C08J 9/28*** *(2006.01)* ***C08K 3/01*** *(2018.01)*
***C08L 21/00*** *(2006.01)*

(86) International application number:
**PCT/JP2018/029964**

(87) International publication number:
**WO 2019/049605 (14.03.2019 Gazette 2019/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.09.2017 JP 2017171428**

(71) Applicant: **Synztec Co., Ltd.**
**Tokyo 105-0012 (JP)**

(72) Inventor: **NEMOTO, Wataru**
**Yokosuka-shi**
**Kanagawa 237-0062 (JP)**

(74) Representative: **Strehl Schübel-Hopf & Partner**
**Maximilianstrasse 54**
**80538 München (DE)**

# (54) PRESSURE-SENSITIVE ELASTOMER POROUS BODY

(57) The pressure-sensitive elastomer porous body of the invention is a cured product of an elastomer emulsion, which cured product is obtained from an emulsion composition containing, as a continuous phase, a liquid rubber material forming an elastomer through curing. The emulsion composition contains a conducting agent in an amount of 2.7 wt.% to 3.5 wt.% with respect to the entire amount of the composition, and the electrical resistance (Ω) of the porous body increases with increasing compressibility C (%) thereof.

EP 3 680 286 A1

## Description

### Technical Field

The present invention relates to a pressure-sensitive elastomer porous body.

### Background Art

Electrophotographic image-forming apparatuses (e.g., a printer and a copying machine) employ a fixing roller, a pressure roller, or a similar roller in an image fixation unit for fixing an unfixed toner image. Such a fixing roller, a pressure roller, or the like is rotationally driven at high temperature, while the roller is provided with a nip portion by pressure. Thus, in order to save heat energy, the elastic layer of the fixing roller, pressure roller, etc. is formed of, for example, a porous elastomer so as to reduce heat capacity of the elastic layer. This technique is widely known in the art.

However, a problem has arisen in the case where the elastic layer of the fixing roller, pressure roller, etc. is formed of a silicone rubber foam produced by use of a foaming agent. Specifically, foam cells in the rubber foam are broken due to stress concentration during compression, since possible variation exists in cell size and intercellular thickness. In this case, the surface pressure of the nip portion is reduced, and fixation failure or the like problematically occurs.

Under such circumstances, interest has arisen in an elastomer porous body including uniform spherical cells which is produced from an emulsion composition containing, as a continuous phase, a liquid rubber material forming an elastomer through curing (see, for example, Patent Documents 1 and 2).

Patent Documents 1 and 2 disclose that various additives can be used in accordance with the purpose of employing the elastomer porous body. The additives used in production of conductive elastomer porous bodies are conducting agents (also called electric conductivity-imparting material) such as carbon black and metallic powder.

### Prior Art Documents

### Patent Documents

Patent Document 1: Japanese Patent No. 4761297
Patent Document 2: Japanese Patent No. 5201782

### Summary of the Invention

### Problems to be Solved by the Invention

Patent Documents 1 and 2 merely disclose examples of the conducting agent which can be used in the elastomer porous bodies. Also, the documents do not mention as to the type and amount of the conducting agent, and the electrical properties of the produced conductive elastomer porous body are not tested. Accordingly, the electrical properties of the conductive elastomer porous bodies disclosed in Patent Documents 1 and 2 are indefinite, and the use of the elastomer porous bodies is not specified.

The present invention has been conceived in order to solve the aforementioned technical problems of prior art. Thus, an object of the present invention is to provide a pressure-sensitive elastomer porous body whose electrical properties can be varied in response to compressibility. Means for Solving the Problems

The present inventor has conducted extensive studies on the electrical properties of conductive elastomer porous bodies, and has found that the electrical property behavior of a conductive elastomer porous body varies in response to compressibility, when the amount of the conducting agent falls within a specific range. The present invention has been accomplished on the basis of this finding.

In a first mode of the present invention for attaining the aforementioned object, there is provided a pressure-sensitive elastomer porous body formed of a cured product of an elastomer emulsion, which cured product is obtained from an emulsion composition containing, as a continuous phase, a liquid rubber material forming an elastomer through curing, characterized in that
the emulsion composition contains a conducting agent in an amount of 2.7 wt.% to 3.5 wt.% with respect to the entire amount of the composition, and
the electrical resistance (Ω) of the porous body increases with increasing compressibility C (%) thereof.

A second mode of the present invention is a specific embodiment of the pressure-sensitive elastomer porous

body of the first mode, wherein,
when the common logarithmic value R (LogQ) of the electrical resistance (Ω) linearly varies with increasing compressibility C (%) represented by the following formula (1) :

$$C=(t_1/t_0)\times 100 \quad \cdots \quad (1),$$

wherein $t_0$ represents the thickness before compressive deformation, and $t_1$ represents the difference between the thickness before compressive deformation and the thickness after compressive deformation,
the ratio (LogΩ/%) of the amount of variation in the common logarithmic value of the electrical resistance ($R_1$ - $R_0$) to the increase in compressibility C (%) is represented by the following formula (2):

$$(R_1 - R_0)/C \geq 0.05 \quad \cdots \quad (2),$$

wherein $R_0$ represents the common logarithmic value of the electrical resistance before compressive deformation, and $R_1$ represents the common logarithmic value of the electrical resistance after compressive deformation.

Effects of the Invention

The present invention enables of provision a pressure-sensitive elastomer porous body whose electrical property behavior can be varied in response to compressibility.

Brief Description of the Drawings

[FIG. 1]
A sketch for illustrating the method of measuring the electrical resistance of the elastomer porous bodies of the Examples and Comparative Examples.
[FIG. 2]
A sketch for illustrating the method of measuring the electrical resistance of the elastomer porous body of Example 2, under repeated compressive deformation.
[FIG. 3]
A graph showing of the electrical resistance of the elastomer porous body of Example 2, under repeated compressive deformation.

Modes for Carrying Out the Invention

(Pressure-sensitive elastomer porous body)

Hereinafter, an embodiment of the pressure-sensitive elastomer porous body of the present invention will be described.
The pressure-sensitive elastomer porous body of this embodiment is formed of a cured product of an elastomer emulsion, which cured product is obtained from an emulsion composition containing, as a continuous phase, a liquid rubber material forming an elastomer through curing. The emulsion composition contains a conducting agent in an amount of 2.7 wt.% to 3.5 wt.% with respect to the entire amount of the composition, and the electrical property of the porous body can be varied in response to compressibility thereof. The term "electrical property" in this embodiment refers to the change in electrical property in the compressive direction of the pressure-sensitive elastomer porous body, when the body is compressed by outer force.
The pressure-sensitive elastomer porous body contains a matrix formed of an elastomer obtained through curing a liquid rubber material, a plurality of cells dispersed and distributed in the matrix, and a specific amount of a conducting agent dispersed and distributed in the matrix.
Examples of the elastomer-forming liquid rubber material include silicone, urethane, chloroprene, ethylene-propylene copolymer (EPM), ethylene-propylene-diene terpolymer (EPDM), styrene-butadiene rubber (SBR), nitrile-butadiene rubber (NBR), polyester-base elastomer, polyether-base elastomer, polyolefin-base elastomer, and epichlorohydrin rubber. These elastomers may be appropriately chosen in accordance with use. When silicone rubber is chosen as the elastomer, the pressure-sensitive elastomer porous body can be provided with properties including heat resistance, aging resistance, tracking resistance, cold resistance, and oil resistance.

The pressure-sensitive elastomer porous body is formed through the following procedure. Specifically, a liquid rubber serving as the continuous phase of the elastomer is cured, while the emulsion state of the liquid rubber is maintained, to thereby form a matrix formed of the elastomer. Subsequently, the dispersion phase is removed, to thereby provide a plurality of cells. Although the details will be described hereinbelow, the pressure-sensitive elastomer porous body of the embodiment is obtained through the aforementioned method (hereinafter referred to as an "emulsion-based production method"). This production method differs from a chemical foaming-based production method involving foaming in by use of a chemical agent. Notably, the dispersion phase which may be used in the embodiment is an aqueous medium such as water or an alcohol.

In the pressure-sensitive elastomer porous body produced through the aforementioned emulsion-based production method, a plurality of cells are provided. The cells have a completely spherical shape. The cells are individually separated single cells, connected cells via inter cellar paths, or a mixture of these cell types.

The pressure-sensitive elastomer porous body of the present invention includes a plurality of very minute cells at high density. Thus, as compared with conventional elastomer porous bodies produced through the chemical foaming-based production method and having a similar porosity, the number of cells per unit area greatly increases. The porosity of the pressure-sensitive elastomer porous body is, for example, 30% or higher, preferably 40% or higher, and the number of cells per 1 $mm^2$ is ≥200, preferably ≥1,000, more preferably ≥2,000.

Further, the pressure-sensitive elastomer porous body can be provided with substantially only completely spherical cells, by removing intrinsic cells attributed to incorporation of air at during formation of the elastomer emulsion from the emulsion composition. From this viewpoint, when the elastomer emulsion is prepared under reduced pressure, air foam cells present in the elastomer emulsion can be removed. As a result, the porous body includes only the cells provided via removal of the dispersion phase, and the provided cells substantially have a completely spherical shape.

In the pressure-sensitive elastomer porous body, the proportion of cells having a size of ≤50 μm is ≥50% based on the total number of the cells.

The cells included in the pressure-sensitive elastomer porous body essentially have a cell size of 0.1 μm to 70 μm, preferably 0.1 μm to 60 μm. The proportion of the cells having a cell size of ≤50 μm is essentially ≥50% with respect to the total number of cells, preferably ≥80%.

In the pressure-sensitive elastomer porous body, the proportion of the cells satisfying the long diameter-short diameter relationship represented by the following formula (3) is essentially ≥50% with respect to the total number of cells. In the following formulas (3) and (4), m represents a long diameter of a cell, and n represents a short diameter of the cell. In formula (3), the ratio of the difference between m and n to m; i.e., (m-n)/m, is an index for the sphericity of a cell (for assessing deviation from spherical form). Alternatively, the proportion of the cells also satisfying the relationship represented by the following formula (4) is essentially ≥80% with respect to the total number of cells.

$$0 \leq (m-n)/m \leq 0.5 \quad \cdots \quad (3)$$

$$0 \leq (m-n)/n \leq 0.5 \quad \cdots \quad (4)$$

In the above formulas (3) and (4), the long diameter (m) refers to the maximum distance between two points on the contour of a cell, as observed on a cross-section of the pressure-sensitive elastomer porous body, wherein the virtual line between the two points passes through the nominal center of the cell. Similarly, the short diameter (n) refers to the minimum distance between two points on the contour of the cell, wherein the virtual line between the two points passes through the nominal center of the cell. In a specific procedure, an arbitrary cross-section of the pressure-sensitive elastomer porous body is observed under an SEM, to thereby provide a photoimage. In an area where about 100 to about 250 cells are identified, the long diameter (m) and the short diameter (n) of each cell are measured. The measurement may be conducted manually by means of Vernier calipers. The size of the cell corresponds to the half value of the sum of the long diameter (m) and the short diameter (n). When the cell assumes a complete sphere, m is equal to n (m=n).

Also, the pressure-sensitive elastomer porous body essentially has a mean cell size of ≤30 μm, preferably ≤10 μm. The mean cell size may also be determined through image processing. The image processing may be performed by means of, for example, a tool "measurement scale," which is attached to a digital microscope (product of Keyence Corp.).

When the cell size characteristics of the aforementioned area where about 100 to about 250 cells are identified

are similar to those of the entire porous body, the cell size of the pressure-sensitive elastomer porous body can be assessed as "uniform," and correctly represents the cell size characteristics defined in the present invention; i.e., cell size, mean cell size, proportion of the cells having a cell size of ≤50 μm, cell sphericity, and the like.

The pressure-sensitive elastomer porous body contains a specific amount of a conducting agent which is uniformly dispersed and distributed in the aforementioned matrix. By virtue of the conducting agent, the volume resistivity of the pressure-sensitive elastomer porous body can be adjusted to about $1 \times 10^3$ Qcm to about $1 \times 10^{12}$ Ωcm.

No particular limitation is imposed on the conducting agent, so long as the agent can impart conductivity. Examples of the electron-conducting agent include carbon-containing particles such as carbon black (amorphous carbon) and graphite; and nickel (Ni), copper (Cu), gold (Au), silver (Ag), aluminum (Al), iron (Fe), chromium (Cr), and stainless steel (SUS), and appropriate combinations thereof (alloy or the like) in the form of metallic powder. Examples of the ion-conducting agent include an ammine complex salt, a perchlorate salt, a bromate salt, an iodate salt, a carboxylate salt, a sulfonate salt, a sulfate salt, and an acetate salt of a metal such as lithium (Li), sodium (Na), potassium (K), calcium (Ca), or magnesium (Mg). Notably, the above electron conducting agents and ion-conducting agents may be used singly or in combination, as the conducting agent.

The conducting agent may be appropriately chosen in accordance with uses thereof. When carbon black is chosen, conductivity is imparted. Furthermore, when the type and amount of the functional group on carbon black particles are modified through a specific treatment, the surface properties of the pressure-sensitive elastomer porous body can be readily modified. As a result, dispersibility of carbon black particles in the pressure-sensitive elastomer porous body and the reliability of the electrical property as mentioned below can be enhanced.

The conducting agent may be incorporated into the elastomer porous body in an amount of 2.7 wt.% to 3.5 wt.% with respect to the entire amount of the emulsion composition, preferably 3.1 wt.% to 3.5 wt.%. Through incorporation of a specific amount of the conducting agent into the emulsion composition, conductivity is imparted to the pressure-sensitive elastomer porous body. Although no precise mechanism has been elucidated, the behavior of an electrical property can be modified in response to compressibility.

The concept "electrical property" in the embodiment refers to such a unique electrical property that the electrical resistance in the compressive direction varies due to outer force applied to the pressure-sensitive elastomer porous body. More specifically, the property refers to such a characteristic that electrical resistance increases in response to an increase in compressibility during pressurization of the pressure-sensitive elastomer porous body. However, the pressure-sensitive elastomer porous body of the embodiment does not necessarily exhibit variation in electrical property (i.e., an increase in electrical resistance) in the entire range of voltage employed under application of compressive deformation. The porous body essentially exhibits a change in electrical property at least within a voltage range practically employed for the target use (e.g., within a range of 10 V to 1,000 V).

Generally, there has been known an elastomer porous body having conductivity (i.e., a conductive elastomer porous body) which is produced through a chemical foaming-based production method, including foaming and curing an elastomer composition containing a liquid rubber material, a conducting agent, and a foaming agent.

Conductive elastomer porous bodies produced through the chemical foaming-based production method correspond to silicone elastomer porous bodies of the below-mentioned Comparative Examples 4 to 7. Actually, since these silicone elastomer porous bodies cannot gain conductivity, even when the conducting agent of the same level as that of the present embodiment is added, the amount of conducting agent increases. Such silicone elastomer porous bodies produced under the aforementioned conditions can be provided with cells attributable to chemical foaming. Thus, the cell size of the formed cells is ≥6 times that in the present embodiment. Due to such a cell morphology, particles of the conducting agent are separated from one another, and conceivably, conductivity can be imparted only when the amount of the conducting agent is increased.

Meanwhile, there have also be known conductive elastomer porous bodies which is formed of a cure product of an elastomer emulsion prepared from an emulsion composition containing a liquid rubber material and a specific amount of a conducting agent, and which is produced through the emulsion-based production method (see, for example, Patent Documents 1 and 2). Notably, the emulsion-based production method is equivalent to the emulsion-based production method employed in this embodiment.

Patent Documents 1 and 2 disclose that the produced conductive elastomer porous bodies are employed as an elastic layer of a fixing roller, a pressure roller, or the like disposed in an image fixation unit for fixing an unfixed toner image of an electrophotographic image-forming apparatus such as a printer or a copying machine, whereby charging of the surface of a roller is prevented. In a general mode of use, the fixing roller or the pressure roller in the fixation unit is provided with a nip portion during pressurization. In other words, the conductive elastomer porous bodies are rotationally driven at high temperature, while they are elastically deformed.

Therefore, from the viewpoint of preventing charging on the roller surface, it is not preferred that a fixing roller, a pressure roller, etc. exhibit an electrical insulation property, which is caused by a rise in electrical resistance (or surface resistivity) due to elastic deformation of the conductive elastomer porous body. Patent Documents 1 and 2 fail to specify the type and amount of the conducting agent. Even if the elastomer porous bodies are produced through the same

emulsion-based production method as employed in the embodiment, the amount of the conducting agent would not be the same, in consideration of the electrical property.

Meanwhile, publications of Japanese Patent No. 4655252, No. 4517225, and No. 4630964 (hereinafter referred to as "Reference Documents 1 to 3") disclose pressure-sensitive conductive elastomers formed of a non-conductive elastomer (e.g., silicone) into which a conducting agent (e.g., spherical carbon particles) is incorporated in an amount of 0.5 wt.% to 40 wt.%. The pressure-sensitive conductive elastomers exhibit high electrical resistance in a non-pressurized and non-deformation state. The electrical resistance thereof decreases with increasing load for compressive deformation, whereby the elastomers exhibit electrical conductivity. Thus, the elastomers are expected to be employed in pressure-sensitive conductivity sensors and the like.

Namely, the pressure-sensitive conductive elastomers of Reference Documents 1 to 3 are essentially equivalent to the pressure-sensitive elastomer porous body of the embodiment, in that a specific conducting agent has been incorporated, and the electric property behavior varies in response to compressibility. However, the pressure-sensitive conductive elastomers of Reference Documents 1 to 3 are non-porous, and the electrical resistance increases with increasing load for compressive deformation. Thus, the present invention differs from the inventions of Reference Documents 1 to 3.

Although the precise mechanism of the increase in electrical resistance with increasing compressivility has not been elucidated, the pressure-sensitive elastomer porous body of the embodiment, having considerable porosity and containing a specific conducting agent, is thought to exhibit electrical property behavior which differs from that of the pressure-sensitive conductive elastomers of Reference Documents 1 to 3.

As used herein, the electrical property of the pressure-sensitive elastomer porous body of the embodiment refers to such a characteristic that the electrical resistance increases with increasing load for compressive deformation. The electrical property will be described more specifically by means of a simulated linear model. In the model, the degree of compressive deformation upon application of a load to the pressure-sensitive elastomer porous body is represented by compressibility C (%), and the common logarithmic value of the electrical resistance of the electrical resistance measurement R' (Ω) is R (LogΩ). It is also assumed that the common logarithmic value R (LogΩ) of the electrical resistance of the electrical resistance measurement R' (Ω) is linearly varied in response to variation in compressibility C (%).

The compressibility C (%) in the linear model of the pressure-sensitive elastomer porous body is represented by the following formula (1), wherein $t_0$ represents the thickness of a pressure-sensitive elastomer porous body having a specific shape before compressive deformation, and $t_1$ represents the difference (amount of compression) between the thickness before compressive deformation and the thickness after compressive deformation. Specific examples of the compressibility C (%) will be given in the Examples.

$$C=(t_1/t_0)\times 100 \quad \cdots \quad (1)$$

In the linear model of the aforementioned common logarithmic value R (LogΩ) of the electrical resistance measurement R' (Ω) with respect to compressibility C (%), the pressure-sensitive elastomer porous body has a ratio (LogΩ/%) of the amount of variation ($R_1$ - $R_0$) to the variation in compressibility C (%) satisfying the following formula (2):

$$(R_1 - R_0)/C \geq 0.05 \quad \cdots \quad (2),$$

wherein $R_0$ represents the common logarithmic value of the electrical resistance before compressive deformation, and $R_1$ represents the common logarithmic value of the electrical resistance after compressive deformation.

Since the above condition (2) is satisfied, the common logarithmic value R (LogΩ) of the electrical resistance R' (Ω) is linearly varied with respect to the factor ($R_1$ - Ro)/C of compressibility C (%). Thus, the pressure-sensitive elastomer porous body exhibits an increase in common logarithmic value R (LogΩ) of the electrical resistance R' (Ω) with increasing the aforementioned compressibility C (%).

As described hereinabove, in the pressure-sensitive elastomer porous body of the present embodiment, the amount of conducting agent with respect to the entire amount of the emulsion composition is regulated. By virtue of the tuning, the electrical resistance R (Ω) can be elevated with increasing compressibility C (%). Although details will be described in the Examples, the pressure-sensitive elastomer. porous body of the embodiment has high mechanical strength and exhibits excellent durability to repeated compressive deformation and reproducibility of variation in electrical resistance with respect to repeated compressive deformation.

The compressibility C (%) of the pressure-sensitive elastomer porous body of the present embodiment varies depending on the amount of conducting agent and applied voltage and is ≥20%, preferably ≥30%, particularly preferably

≥40%. In such cases, a rise in electrical resistance (Ω) is observed. The pressure-sensitive elastomer porous body has low electrical resistance and thus is conductive in a non-pressurized and non-deformation state.

Notably, the pressure-sensitive elastomer porous body of the present embodiment is produced through the emulsion-based production method. Details of the production method will be described in another paragraph. Furthermore, through regulating the amount of conducting agent to the entire amount of the emulsion composition, the electrical property can be uniquely varied in response to compressibility.

The reason why a pressure-sensitive elastomer porous body having a unique electrical property is formed is employment of the emulsion-based production method using an emulsion composition containing a conducting agent in a specific amount. Such a unique electrical property cannot be realized by an elastomer porous body produced though a different production method such as a chemical foaming-based production method. Conceivably, the cell structure of the pressure-sensitive elastomer porous body produced through the emulsion-based production method may microscopically differ from the cell structure provided through a chemical foaming-based production method or the like. That is, the microscopic difference is attributed to the difference in production method. However, difficulty is encountered in identifying the microscopic difference so as to differentiate the elastomer porous body produced through the emulsion-based production method from the elastomer porous body produced through the chemical foaming-based production method or the like.

If the aforementioned conceivable cell structure is observed in the pressure-sensitive elastomer porous body of the present embodiment, it would be apparent that the elastomer porous body is surely produced through the emulsion-based production method, but not through other methods such as the chemical foaming-based production method. Thus, the pressure-sensitive elastomer porous body of the present embodiment is a useful material exhibiting a unique electrical property. However, differentiation of the microscopic structure provided through the emulsion-based production method from that provided through other production methods must be accomplished only through heavy-load analyses, to thereby determine the unique electrical property. In order to attain the object, impracticable numbers of experiments, tests, etc. are required, which imposes considerably high cost. Thus, it is extremely difficult to collectively express the analytical results.

Therefore, it is unrealistic to directly identify the pressure-sensitive elastomer porous body of the present embodiment by the structure and characteristic other than production method.

(Pressure-Sensitive Elastomer Porous Body Production Method)

Next will be described the method for producing the pressure-sensitive elastomer porous body according to the present embodiment of the present invention. Here, an example of the method for producing a pressure-sensitive silicone elastomer porous body is described. The production method employs silicone (liquid silicone rubber material) as a liquid rubber material forming the elastomer serving as the aforementioned matrix.

The pressure-sensitive silicone elastomer porous body is produced through the emulsion-based production method which enables suitable production of an elastomer emulsion (cured product) via a water-in-oil emulsion (emulsion composition) containing raw materials. As used herein, the emulsion-based production method refers to a production method including sufficiently agitating raw materials under reduced pressure or agitating raw materials and then reducing the pressure, to thereby emulsify the mixture; and immediately heating the thus-formed emulsion composition for curing, to thereby yield an elastomer emulsion (cured product).

Generally, the emulsion-based production method enables of production of a pressure-sensitive silicone elastomer porous body (elastomer emulsion) from the corresponding emulsion composition without effervescence due to chemical foaming. Although details will be described in another paragraph, the dispersion phase (e.g., water particles) of the emulsion composition is confined in the elastomer cured through primary heating. In secondary heating, the dispersion phase volatiles. Thus, the resultant pressure-sensitive silicone elastomer porous body has a large number of very minute cells at high density.

The emulsion composition can be produced through a variety of methods. In a general procedure of production, a liquid silicone rubber material (preferably a liquid silicone rubber material having low viscosity) which forms a silicone elastomer via curing, a silicone oil material having a surface-activating action, an aqueous solvent such as water or an alcohol serving as a dispersion phase, and an optional additive (if needed) are mixed under reduced pressure, to thereby form an emulsion composition, and the composition is sufficiently agitated. Alternatively, the aforementioned mixture of raw materials is mixed and agitated, and the resultant product is degassed under reduced-pressure conditions, to thereby yield an emulsion composition.

As described above, the pressure-sensitive silicone elastomer porous body includes virtually spherical cells. In order to produce such an elastomer porous body, the emulsion composition must be prepared by mixing raw materials under reduced pressure or mixing raw materials and then reducing the pressure. As used herein, production of an emulsion composition refers to mixing and agitating raw materials under reduced pressure to form an emulsion (i.e., preparing the emulsion composition while the pressure is reduced), or forming an emulsion after mixing and agitating

raw materials and subsequently reducing the pressure (i.e., placing the prepared emulsion composition under reduced-pressure conditions).

The reduced pressure is, for example, -30 kPa or lower, preferably -60 kPa or lower. Instead of mixing and agitating under reduced pressure, or placing the mixture under reduced-pressure conditions after mixing and agitating, the raw materials may be degassed, and the resultant materials may be agitated under such conditions that the materials are not in contact with gas such as air, to thereby form an emulsion composition. Agitation may be performed by means of an agitator at a rotation speed of 300 rpm to 1,000 rpm. That is, air present in the emulsion composition can be removed through defoaming by means of, for example, a vacuum apparatus during formation of the emulsion composition or without heating the formed emulsion composition.

The method for producing the emulsion composition is not limited to the aforementioned production method. No particular limitation is imposed on the sequence of addition of a liquid silicone rubber material, a silicone oil material having a surface-activating action, water, and an optional additive.

For producing the pressure-sensitive silicone elastomer porous body from the thus-obtained emulsion composition, in one possible procedure, the composition is subjected to primary heating in the presence of an optional curing catalyst for curing while the components of the emulsion composition are not volatile. Subsequently, the composition is completely cured through secondary heating for removing liquid.

In the primary heating, heating is preferably conducted at 130°C or lower, in order to prevent volatilization of water contained in the emulsion composition and cure the liquid silicone rubber material. The heating time is generally about 5 minutes to about 60 minutes. Through this primary heating, the liquid silicone rubber material is cured, and water particles can be maintained in the emulsion composition under the same conditions. The thus-cured silicone rubber is further cured to such an extent that the rubber can be stable against expansion force during vaporization of water during secondary heating.

Subsequently, for removing water from the cured silicone rubber containing water particles, secondary heating is performed. The secondary heating is preferably performed at 70°C to 300°C. When the heating temperature is lower than 70°C, a long period of time is required for removal of water, whereas when the heating temperature is in excess of 300°C, the cured silicone rubber may be deteriorated. Water can be vaporized through heating at 70°C to 300°C for 1 hour to 24 hours. Through the secondary heating, water can be removed, and the silicone rubber material can be completely cured. As a result of removal of water via volatilization, cells having a size almost the same as that of the water particles remain in the cured silicone rubber material (silicone elastomer).

Next, the raw materials for producing the pressure-sensitive silicone elastomer porous body will be described.

No particular limitation is imposed on the liquid silicone rubber material, serving as a liquid rubber material forming an elastomer of the aforementioned matrix, so long as the rubber material can provide a silicone elastomer through heat curing. For example, an addition reaction curable liquid silicone rubber is preferably used. Notably, these liquid silicone rubber materials may be used in combination of two or more species.

Also, a commercial liquid silicone rubber material may be used. In production of an addition reaction curable liquid silicone rubber product, components of a polysiloxane having an unsaturated aliphatic group and an active hydrogen-containing polysiloxane are separately provided. A curing catalyst for curing the two components is included in the polysiloxane having an unsaturated aliphatic group.

When the polysiloxane having an unsaturated aliphatic group and the active hydrogen-containing polysiloxane are provided in combination, the polysiloxane having an unsaturated aliphatic group and a part of the surface-activating action silicone oil material are mixed and agitated, to thereby form a first mixture. Separately, the active hydrogen-containing polysiloxane and the remaining part of the silicone oil material having a surface-activating action are mixed and agitated, to thereby form a second mixture. Then, the first mixture and the second mixture are mixed and agitated, with gradual addition of water thereto. Through carrying out further agitation, an emulsion composition of interest can be prepared.

The polysiloxane having an unsaturated aliphatic group has a structure represented by the following formula (5).

[F1]

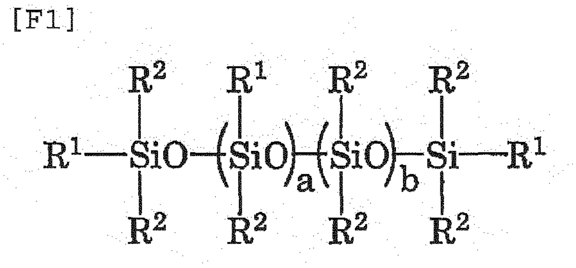

(5)

In the above formula (5), $R^1$ represents an unsaturated aliphatic group, and $R^2$ represents a $C_1$ to $C_4$ lower

alkyl group, a fluorine-substituted $C_1$ to $C_4$ lower alkyl group, or a phenyl group. The sum a+b is generally 50 to 2,000. The unsaturated aliphatic group $R^1$ is generally a vinyl group. $R^2$ is generally a methyl group.

The active hydrogen-containing polysiloxane has a structure represented by the following formula (6).

[F2]

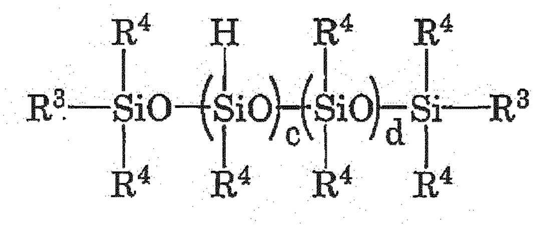

(6)

In the above formula (6), $R^3$ represents hydrogen or a $C_1$ to $C_4$ lower alkyl group, and $R^4$ represents a $C_1$ to $C_4$ lower alkyl group. The sum c+d is generally 8 to 100. The lower alkyl group $R^3$ or $R^4$ is generally a methyl group.

In the case where a liquid rubber material other than the liquid silicone rubber material is used, the emulsion composition is preferably an emulsion including the liquid rubber material serving as the continuous phase and a solvent which is separated with the continuous phase as the dispersion phase, and if needed, containing an optional surfactant, a substance having a surface-activating action, or other additives.

The silicone oil material having a surface-activating action serves as a dispersion state stabilizer for consistently dispersing water in the emulsion composition. In other words, the silicone oil material having a surface-activating action exhibits affinity to water and also to the liquid silicone rubber material.

In the emulsion composition, water is present as a noncontinuous phase (i.e., a dispersion phase) in the form of particles (water drops) dispersed in the composition. The cell (bubble) size of the pressure-sensitive silicone elastomer porous body substantially depends on the size of water particles.

For producing an emulsion having particularly excellent water-dispersion stability, the emulsion composition preferably contain a silicone oil material having surface-activating action in an amount of 0.2 parts by weight to 10 parts by weight and water in an amount of 10 parts by weight to 250 parts by weight, with respect to 100 parts by weight of the liquid silicone rubber material. By use of the emulsion composition having such excellent water-dispersion stability, a suitable porous body can be produced more consistently. Notably, two or more silicone oil materials each having a surface-activating action may be used in combination.

As described above, the pressure-sensitive silicone elastomer porous body contains a conducting agent, which can be added to the emulsion composition. Since the type and the amount of the conducting agent which can be incorporated into the emulsion composition are described above, detailed description will be omitted.

The conducting agent is present in a mixture or dispersion state in the emulsion composition. The conductivity of the pressure-sensitive silicone elastomer porous body substantially depends on the conducting agent. So long as the conducting agent is dispersed or distributed in the pressure-sensitive elastomer porous body, the agent may be added to the emulsion composition, or to the liquid rubber material forming the elastomer. When two or more liquid silicone rubber materials are used in combination, the conducting agent(s) may be added to each rubber material in an amount or amounts within the defined upper limit of the amount of the conducting agent.

As described above, in the case of where an addition reaction curable liquid silicone rubber is used as the liquid silicone rubber material, and the polysiloxane having an unsaturated aliphatic group and the active hydrogen-containing polysiloxane are provided in combination, the conducting agent may be added to and dispersed in each of the polysiloxane having an unsaturated aliphatic group and the active hydrogen-containing polysiloxane. Also, the conducting agent may be added to and dispersed in each of the aforementioned first mixture and second mixture. Alternatively, the conducting agent may be added and dispersed, during preparation of an emulsion by mixing the first mixture and the second mixture.

To the pressure-sensitive silicone elastomer porous body, a variety of additives may be added in accordance with the purpose of use. Examples of such additives include a colorant such as a pigment or a dye, and a filler such as silica. These additives may be added to the emulsion composition. The emulsion composition may further contain a non-reactive silicone oil having low molecular weight for adjusting the viscosity of the emulsion, which is aimed to, for example, facilitate defoaming. When the viscosity of the emulsion composition is 1 cSt to 200,000 cSt, the emulsion can be easily defoamed, which is preferred in handling thereof.

## Examples

The present invention will next be described in more detail by way of examples, which should not be construed

as limiting the invention thereto. In the following Examples, the prepared emulsion compositions were degassed under reduced-pressure conditions. However, the emulsion compositions may be prepared while the pressure is being reduced.

Example 1

As liquid silicone rubber materials, a conductive liquid silicone rubber (X-34-2777A/B, product of Shin-Etsu Chemical Co., Ltd.) and a non-conductive liquid silicone rubber were used. These liquid silicone rubber were provided such that an active hydrogen-containing polysiloxane and a vinyl-group-containing polysiloxane were separately packed. To the vinyl-group-containing polysiloxane, a specific amount of a platinum catalyst was added. Hereinafter, the conductive silicone rubber is referred to as "silicone rubber agent A, "and the non-conductive silicone rubber is referred to as "silicone rubber agent B."

The employed conductive liquid silicone rubber contains carbon black as a conducting agent. The ratios in amount of conductive liquid silicone rubber to the non-conductive liquid silicone rubber are shown in Table 1. The amount of conducting agent (carbon black) was calculated by each of the ratios. As a dispersion stabilizer, a polyether-modified silicone oil (product of Shin-Etsu Chemical Co., Ltd.) was used.

A mixture (100 parts by weight) of silicone rubber agent A and silicone rubber agent B (1 : 1) was mixed with a polyether-modified silicone oil (1.5 parts by weight). The resultant mixture was agitated for 5 minutes by means of a handy mixer, to thereby attain a sufficient dispersion state. As a result, a mixture (emulsion composition) was prepared.

Then, water (10 parts by weight) was added to the above-prepared mixture, and the resultant mixture was further agitated for 2 minutes. While the mixture was agitating by means of a handy mixer, water (90 parts by weight) was slowly added thereto, whereby an elastomer emulsion was prepared.

The thus-prepared elastomer emulsion was defoamed in a vacuum apparatus, to thereby remove air remaining in the emulsion. The emulsion was then poured into a metal mold (depth: 12 mm) for compression molding and thermally pressed at 100°C for 30 minutes by means of a press platen (primary heating). The thus-yielded compact (a porous body precursor) was heated at 150°C for 5 hours in an electric furnace (secondary heating) for removal of water. Thus, columnar test pieces (diameter: 29 mm, thickness: 12 mm) of a silicone elastomer porous body (elastomer emulsion cured product) were prepared through the aforementioned emulsion-based production method.

(Examples 2 and 3)

The procedure of Example 1 was repeated, except that the ratios in amount of conductive liquid silicone rubber and non-conductive liquid silicone rubber were changed as shown in Table 1, to thereby prepare test pieces of the corresponding silicone elastomer porous bodies through the emulsion-based production method.

(Comparative Examples 1 to 3)

The procedure of Example 1 was repeated, except that the ratios in amount of conductive liquid silicone rubber and non-conductive liquid silicone rubber were changed as shown in Table 1, to thereby prepare test pieces of the corresponding silicone elastomer porous bodies through the emulsion-based production method.

(Comparative Examples 4 to 7)

Silicone (KE-951U, product of Shin-Etsu Chemical Co., Ltd.), a curing agent, a chemical foaming agent, and carbon black were mixed together, to thereby prepare a mixture. The mixture was formed into a sheet, and the sheet was heated at 200°C for 40 minutes (primary curing). Then, the sheet was subjected to an aging treatment at 210°C for 10 hours. The sheet was cut into columnar test pieces (diameter: 29 mm, thickness 12 mm). The silicone elastomer porous body test pieces were subjected to the chemical foaming-based production method. The ratios in amount of carbon black in the mixture are shown in Table 1.

(Test Example 1)

FIG. 1 is a sketch for illustrating the method of measuring the electrical resistance of the elastomer porous bodies of the Examples and Comparative Examples. As shown in FIG. 1, a test piece S (i.e., each of the test pieces of Examples 1 to 3 and Comparative Examples 1 to 7) was placed on an electrode 1a. An electrode 1b was placed on the test piece S, and the electrodes 1a, 1b were electrically connected to a measurement apparatus 2. In Test Example 1, the electrode 1a was fixed, and the electrode 1b was movable in the vertical direction. As the measurement apparatus 2, a digital ultra-high resistance/microcurrent meter (R8340A) (Advantest Corporation) was employed.

Then, the electrode 1b was moved down (toward test piece S), so as to press the test piece S to a specific

compressibility C (%). In this state (under compressive deformation; test piece S'), a voltage shown in Table 1 (5 V to 1,000 V) was applied to the test piece S', and electrical resistance (Ω) was measured. Subsequently, the electrical resistance value (Ω) was converted a common logarithm value R (LogΩ), and a regression line of common logarithm values R (LogΩ) of resistance (Ω) to the compressibility C was drawn. The slope m(R/C) of the regression line was calculated. The results are shown in Table 1. In a similar manner, before application of compressive deformation to form test piece S' (compression-free; test piece S, compressibility C = 0%), a voltage shown in Table 1 (5 V to 1,000 V) was applied, and electrical resistance (Ω) was measured. Table 1 shows the results.

Notably, compressibility C (%) is represented by the aforementioned formula (1), wherein $t_0$ represents the thickness of test piece S' before compressive deformation (i.e., test piece S), and $t_1$ represents compression amount (i.e., the difference between the thickness before compressive deformation and the thickness after compressive deformation). In Examples 1 to 3 and Comparative Examples 1 to 7, test piece S was pressed until the compressibility C reached 8%, 17%, 25%, 33%, 42%, and 50%, respectively.

As shown in Table 1, a rise in electrical resistance was observed in the silicone elastomer porous body of Example 1 at an applied voltage of 10 V to 1,000 V, and in the silicone elastomer porous bodies of Examples 2 and 3 at an applied voltage of 5 V to 1,000 V. In this case, the slope m(R/C), which is defined as the ratio of the common logarithmic value R (LogΩ) of the electrical resistance (Ω) to the compressibility C (%), was 0.05 or greater,

In contrast, in any of the silicone elastomer porous bodies of Comparative Examples 1 to 7 at an applied voltage of 5 V to 1,000 V, a rise in electrical resistance was observed with a slope m(R/C) of less than 0.05; a decrease in electrical resistance was observed with a slope of a negative value; or the electrical resistance was below detection limit (ND).

(Test Example 2)

Each of the test pieces of Examples 1 to 3 and Comparative Examples 1 to 7 was cut along a radial direction, and a cut surface was observed under an SEM. In an area where about 100 to about 250 cells were identified, the long diameter and the short diameter of each cell were measured by means of Vernier calipers. Also, a cell size characteristic (i.e., a cell size corresponding to the half value of the sum of the long diameter and the short diameter) was determined by means of a tool "measurement scale," which is attached to a digital microscope (product of Keyence Corp.). In addition, the hardness (Asker-C) of each test piece was measured. The results are shown in Table 1.

As shown in Table 1, the silicone elastomer porous bodies of Examples 1 to 3 and Comparative Examples 1 to 3, prepared through the emulsion-based production method, were found to have a cell size of ≤50 μm. Although not illustrated, the SEM image (×100) of the cut surface of each of the test pieces proved production of a porous body having a very minute and uniform cell size. In contrast, the silicone elastomer porous bodies of Comparative Examples 4 to 7, prepared through the chemical foaming-based production method, were found to have a cell size of 300 μm. Although being not illustrated, the SEM image (×100) of the cut surface of each of the test pieces proved production of a porous body having a non-uniform larger cell size as compared with the cases of Examples 1 to 3 and Comparative Examples 1 to 3.

Meanwhile, the silicone elastomer porous bodies of Examples 1 to 3 and Comparative Examples 1 to 7 were found to have almost the same hardness.

[Table 1]

| | | Examples | | | Comparative Examples | | | | | | |
|---|---|---|---|---|---|---|---|---|---|---|---|
| | | 1 | 2 | 3 | 1 | 2 | 3 | 4 | 5 | 6 | 7 |
| Production method | | Emulsion | | | Emulsion | | | Chemical foaming | | | |
| Conducting agent (wt%) | | 2.7 | 3.1 | 3.5 | 2.3 | 3.7 | 3.9 | 3.8 | 5.9 | 7.6 | 11.5 |
| Proportions | Conductive liquid silicone rubber | 7 | 4 | 9 | 3 | 19 | 98 | - | - | - | - |
| | Non-conductive liquid silicone rubber | 3 | 1 | 1 | 2 | 1 | 1 | - | - | - | - |

(continued)

| | | Examples | | | Comparative Examples | | | | | | |
|---|---|---|---|---|---|---|---|---|---|---|---|
| | | 1 | 2 | 3 | 1 | 2 | 3 | 4 | 5 | 6 | 7 |
| Slope m (logΩ/%) | 5V | ND | 0.08 | 0.08 | ND | 0.01 | 0.01 | ND | ND | 0.01 | -0.09 |
| | 10V | 0.22 | 0.09 | 0.09 | ND | 0.01 | 0.01 | ND | ND | 0.01 | ND |
| | 30V | 0.20 | 0.09 | 0.08 | ND | 0.01 | 0.01 | ND | ND | 0.00 | ND |
| | 100V | 0.14 | 0.06 | 0.08 | -0.02 | 0.01 | 0.01 | 0.02 | -0.01 | -0.01 | ND |
| | 300V | 0.17 | 0.06 | 0.07 | -0.01 | 0.01 | 0.01 | 0.00 | 0.00 | ND | ND |
| | 1000V | 0.11 | 0.06 | 0.06 | ND | 0.01 | 0.00 | ND | ND | ND | ND |
| Cell size (μm) | | ≤50 | ≤50 | ≤50 | ≤50 | ≤50 | ≤50 | 300 | 300 | 300 | 300 |
| Hardness (Asker-C) | | 20 | 20 | 20 | 20 | 20 | 20 | 25 | 25 | 25 | 25 |
| Logarithmic R (LogΩ) under non-compression | 5V | ND | 6.52 | 6.13 | ND | 7.47 | 7.12 | ND | ND | 4.51 | 5.25 |
| | 10V | 6.23 | 6.24 | 5.52 | ND | 7.38 | 6.96 | ND | ND | 4.22 | ND |
| | 30V | 6.10 | 5.99 | 5.32 | ND | 7.25 | 6.76 | ND | ND | 4.07 | ND |
| | 100V | 6.42 | 6.31 | 5.12 | 10.70 | 6.97 | 6.48 | 9.99 | 11.36 | 4.43 | ND |
| | 300V | 5.69 | 5.84 | 4.97 | 10.10 | 6.61 | 6.01 | 11.06 | 10.98 | ND | ND |
| | 1000V | 5.82 | 5.36 | 4.78 | 9.71 | 5.89 | 5.41 | ND | ND | ND | ND |

(Test Example 3)

FIG. 2 is a sketch for illustrating the method of measuring the electrical resistance of the elastomer porous body of Example 2, under repeated compressive deformation. As shown in FIG. 2, a test piece S1 of Example 2 was placed on a center area of an electrode 11a, and insulation spacers 31a, 31b, each having a specific thickness d, were placed at the ends of the electrode 11a, respectively. An electrode 11b was placed on the test piece S1 and the insulation spacers 31a, 31b, and the electrodes 11a, 11b were electrically connected to a measurement apparatus 21. In Test Example 3, the electrode 11a was fixed, and the electrode 11b was repeatedly movable in the vertical direction. As the measurement apparatus 21, a digital ultra-high resistance/microcurrent meter (R8340A) (Advantest Corporation) was employed. Through modification of the thickness d of the insulation spacers 31a, 31b, the compressibility C (%) of the test piece S1 was varied within the range of 8% to 42%.

Separately, a specific voltage (1 V to 300 V) was applied to a test piece S1' under compressive deformation (resulting in test piece S1'). The test piece S1 was pressed several times in a repeated manner through moving the electrode 11b, by means of a tensile tester (not illustrated). At several timings during repeated pressurization, electrical resistance (Ω) was measured 7 times in total. FIG. 3 shows the results. The conditions of the tensile tester are as follows.

<Measurement Conditions of Tensile Tester>

- Measurement conditions: temperature: 28°C, humidity: 40%
- Mode: cycle mode
- Stroke: 5 mm
- Compression speed: 21 times/min (about 10,000 compression times per 8 hours)
- Measurement at pressing: 1st, 2nd, 10th, 30th, 100th, 10,000th, and 10,001th
- Relationship between compressibility (%) and interelectrode distance (mm) (i.e., thickness d of insulation spacers 31a, 31b), shown in Table 2.

[Table 2]

| Compressibility (%) | Interelectrode distance (mm) |
|---|---|
| 8 | 11 |
| 17 | 10 |
| 21 | 9.5 |
| 25 | 9 |
| 33 | 8 |
| 42 | 7 |

As shown in FIG. 3, the silicone elastomer porous body of Example 2 exhibited small variation in electrical resistance by the times of compressive deformation steps. In addition, the reproducibility in the electrical resistance change under repeated compressive deformation, and the durability against repeated compressive deformation were satisfactory.

(Summary of the Experiments)

As shown in Table 1 and FIG. 3, the elastomer porous bodies of Examples 1 to 3 were produced through the emulsion-based production method from an emulsion composition comprising a conducting agent in an amount of 2.7 wt.% to 3.5 wt.% with respect to the entire amount of the emulsion composition prepared through mixing and agitating the raw materials. The elastomer porous bodies were produced through the emulsion-based production method. As a result, these pressure-sensitive silicone elastomer porous bodies were found to have a cell size of ≤50 μm and exhibit a rise in electrical resistance in response to the increase in load during compressive deformation. Furthermore, the thus-obtained pressure-sensitive silicone elastomer porous bodies were confirmed to exhibit a ratio (LogΩ/%) of the amount of variation in the common logarithmic value of the electrical resistance ($R_1$ - $R_0$) to compressibility C (%) of 0.05 or higher. Thus, the elastomer porous bodies of Examples 1 to 3 were found to have a unique electrical property.

In contrast, the elastomer porous bodies of Comparative Examples 1 to 3, prepared through the emulsion-based production method but having a conducting agent amount falling outside the aforementioned range, were found to have a cell size of ≤50 μm. However, the ratio (LogΩ/%) of the amount of variation in the common logarithmic value of the electrical resistance ($R_1$ - $R_0$) to compressibility C (%) was not 0.05 or higher. The elastomer porous bodies of Comparative Examples 4 to 7, prepared through the chemical foaming-based production method but having a conducting agent amount falling outside the aforementioned range, were found to fail to have a cell size of ≤50 μm. The ratio (LogΩ/%) of the amount of variation in the common logarithmic value of the electrical resistance ($R_1$ - $R_0$) to compressibility C (%) was not 0.05 or higher. Thus, the elastomer porous bodies of Comparative Examples 1 to 7 were found to fail to have a unique electrical property.

Industrial Applicability

The present invention is suitably applicable to a variety of sensors and other applications, for example, a sensor for a body weight meter, a sensor for a pressure distribution meter, a sensor for a traffic volume counter, a sensor for a position detector employed in a caring and nursing bed or the like, and a pressure-sensitive sensor for a safety device or the like.

Description of Reference Numerals

| | |
|---|---|
| 1a, 1b, 11a, 11b: | electrode |
| 2, 21: | measurement apparatus |
| 31a, 31b | insulation spacer |
| S, S',S1, S1': | test piece |

## Claims

1. A pressure-sensitive elastomer porous body formed of a cured product of an elastomer emulsion, which cured product is obtained from an emulsion composition containing, as a continuous phase, a liquid rubber material forming an elastomer through curing, **characterized in that**
the emulsion composition contains a conducting agent in an amount of 2.7 wt.% to 3.5 wt.% with respect to the entire amount of the composition, and
the electrical resistance (Ω) of the porous body increases with increasing compressibility C (%) thereof.

2. A pressure-sensitive elastomer porous body according to claim 1, wherein,
when the common logarithmic value R (LogΩ) of the electrical resistance (Ω) linearly varies with increasing compressibility C (%) represented by the following formula (1) :

$$C=(t_1/t_0)\times 100 \quad \cdots \quad (1),$$

wherein to represents the thickness before compressive deformation, and $t_1$ represents the difference between the thickness before compressive deformation and the thickness after compressive deformation,
the ratio (LogΩ/%) of the amount of variation in the common logarithmic value of the electrical resistance ($R_1$ - $R_0$) to the increase in compressibility C (%) is represented by the following formula (2):

$$(R_1 - R_0)/C \geq 0.05 \quad \cdots \quad (2),$$

wherein $R_0$ represents the common logarithmic value of the electrical resistance before compressive deformation, and $R_1$ represents the common logarithmic value of the electrical resistance after compressive deformation.

FIG. 1

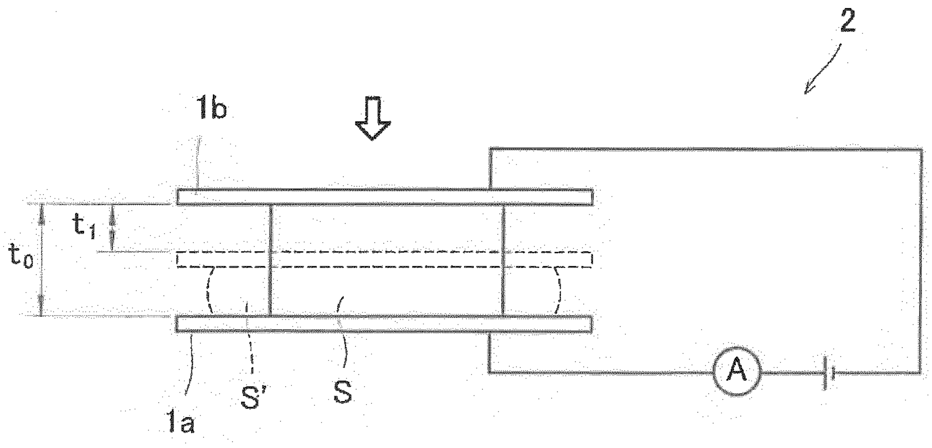


FIG. 2

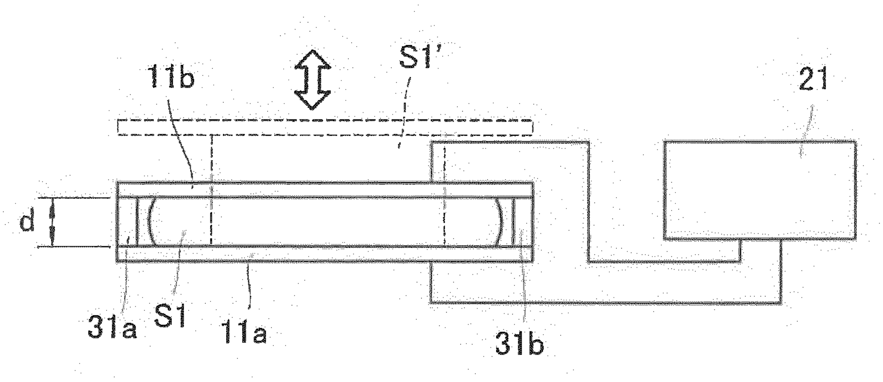

FIG. 3

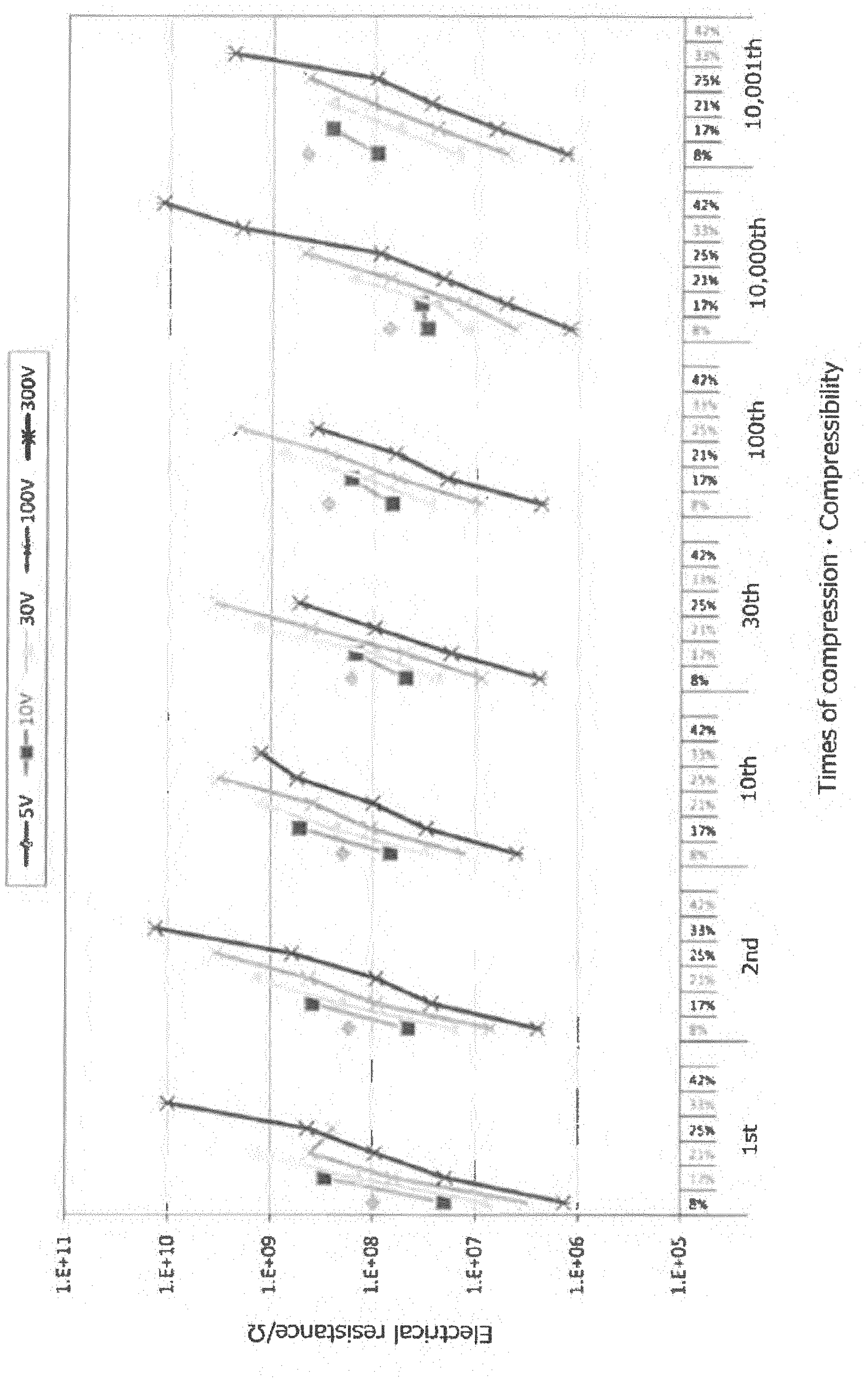
5V
10V
30V
100V
300V
Electrical resistance/Ω
1.E+11
1.E+10
1.E+09
1.E+08
1.E+07
1.E+06
1.E+05
8%
17%
21%
25%
33%
42%
1st
2nd
10th
30th
100th
10,000th
10,001th
Times of compression · Compressibility

## INTERNATIONAL SEARCH REPORT

International application No.
PCT/JP2018/029964

A. CLASSIFICATION OF SUBJECT MATTER
Int.Cl. C08J9/28(2006.01)i, C08K3/01(2018.01)i, C08L21/00(2006.01)i

According to International Patent Classification (IPC) or to both national classification and IPC

B. FIELDS SEARCHED

Minimum documentation searched (classification system followed by classification symbols)
Int.Cl. C08J9/00-9/42, C08K3/00-13/08, C08L1/00-101/14, G03G15/14-15/16, F16C13/00-15/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)
Japio-GPG/FX

C. DOCUMENTS CONSIDERED TO BE RELEVANT

| Category* | Citation of document, with indication, where appropriate, of the relevant passages | Relevant to claim No. |
|---|---|---|
| A | WO 2017/094703 A1 (SUMITOMO RIKO COMPANY LIMITED) 08 June 2017, claims, paragraphs [0001], [0050], [0051], [0076], [0087], [0088], tables 2-4, examples 4-19 (Family: none) | 1-2 |
| A | JP 2013-189496 A (FUKOKU CO., LTD.) 26 September 2013, claims, paragraphs [0037], [0043], tables 1-4, example 7 (Family: none) | 1-2 |

☒ Further documents are listed in the continuation of Box C.    ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 06.09.2018 | 18.09.2018 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2018/029964

C (Continuation). DOCUMENTS CONSIDERED TO BE RELEVANT

| Category* | Citation of document, with indication, where appropriate, of the relevant passages | Relevant to claim No. |
|---|---|---|
| A | JP 2003-226774 A (GE TOSHIBA SILICONES CO., LTD.) 12 August 2003, claims, paragraphs [0049], [0079], table 1, example 3 (Family: none) | 1-2 |
| A | JP 2006-301237 A (NITTO ELECTRIC WORKS LTD.) 02 November 2006, claims, paragraphs [0083]-[0085], [0097] (Family: none) | 1-2 |
| A | JP 2006-316220 A (NITTO ELECTRIC WORKS LTD.) 24 November 2006, claims, paragraph [0022] (Family: none) | 1-2 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 4761297 B
- JP 5201782 B
- JP 4655252 B
- JP 4517225 B
- JP 4630964 B